Europäisches Patentamt

European Patent Office

Office européen des brevets

(11) Publication number: **0 058 032**
**A2**

(19)

(12)

# EUROPEAN PATENT APPLICATION

(21) Application number: **82300508.7**

(22) Date of filing: **01.02.82**

(51) Int. Cl.³: **G 08 B 13/24**
**G 01 S 13/50**

(30) Priority: **11.02.81 GB 8104190**

(43) Date of publication of application:
**18.08.82 Bulletin 82/33**

(84) Designated Contracting States:
**DE FR IT NL SE**

(71) Applicant: **RACAL-MESL LIMITED**
Lochend Industrial Estate Newbridge
Midlothian EH28 8LP Scotland(GB)

(72) Inventor: **Thorne, Thomas George**
4 Sunridge Close
Swanage Dorset(GB)

(72) Inventor: **Ruffe, Louise Ireland**
Shire End House Forgandenny
By Perth Scotland(GB)

(74) Representative: **Foster, David Martyn et al,**
Mathisen, Macara & Co. Lyon House Lyon Road
Harrow Middlesex HA1 2ET(GB)

(54) Radar arrangements.

(57) A portable security unit operating by radar has an antenna (20) mounted at a predetermined distance above the ground which emits an FM CW signal having a carrier frequency in the range 1-2 GHz for example. Reflections from moving targets are sensed and processed with a signal at the transmitted frequency to obtain the second harmonic of the modulation frequency from which in turn the Doppler frequency component is extracted and its amplitude, which varies with range as a second order Bessel function, is measured. The second order Bessel component has a low amplitude for targets near to the unit, thereby minimising false alarms from birds and the like. The amplitude of this component is also attenuated beyond a predetermined distance from the unit and this, in conjunction with attenuation caused by interference between direct and reflected transmitted waves which is arranged to occur beyond the same distance, prevents unwanted echoes from targets outside the desired range of the unit.

FIG. 1.

EP 0 058 032 A2

RADAR ARRANGEMENTS

The invention relates to radar arrangements and security apparatus, and more specifically to security apparatus for detecting, by means of radar, the presence of an intruder within a space to be protected.

According to the invention there is provided a portable intruder detection unit for detecting by radar targets within a predetermined area extending at least partially around the unit, comprising a base carrying transmitting and receiving antenna means, a power supply, means for energising the antenna means to emit a frequency-modulated carrier wave, and means for sensing a Doppler-shifted component in a signal produced by a signal reflected from a moving target within the predetermined area and received by the antenna means.

According to the invention there is further provided a portable radar arrangement comprising a base, transmitting antenna means mounted on the base so as to be at a predetermined height above the ground when the base is standing on the ground, means for energising the antenna means with a carrier frequency-modulated at a predetermined frequency, receiving antenna means mounted on the base so as to receive reflected signals from targets, signal processing means responsive to the reflected signals to produce a processed signal dependent on reflected signals differing in frequency from the transmitted signals, the said processed signal including a series of harmonics of the modulating frequency each modulated by a Doppler-frequency component having an amplitude dependent on a Bessel function term of respective order, means for selecting a predetermined one of the said harmonics, means for extracting the Doppler-frequency component therefrom, and means for sensing the amplitude of the extracted component; the selected harmonic being such that its amplitude is reduced by the respective Bessel function for targets adjacent the transmitting antenna means; and the said predetermined height of the transmitting antenna means being such that direct and ground reflected waves originating from the transmitting antenna means are subject to mutual interference at distances beyond said predetermined distance.

A security unit embodying the invention will now be described by way of example only, with reference to the accompanying diagrammatic drawings in which:

Figure 1 is a perspective external view of the unit;

Figure 2 is a block circuit diagram of the unit;

Figure 3 is a graph showing the variation of amplitude of a signal produced in the unit; and

Figure 4 is a graph showing how the overall signal amplitude received by the unit varies with range for a particular size of intruder, or target.

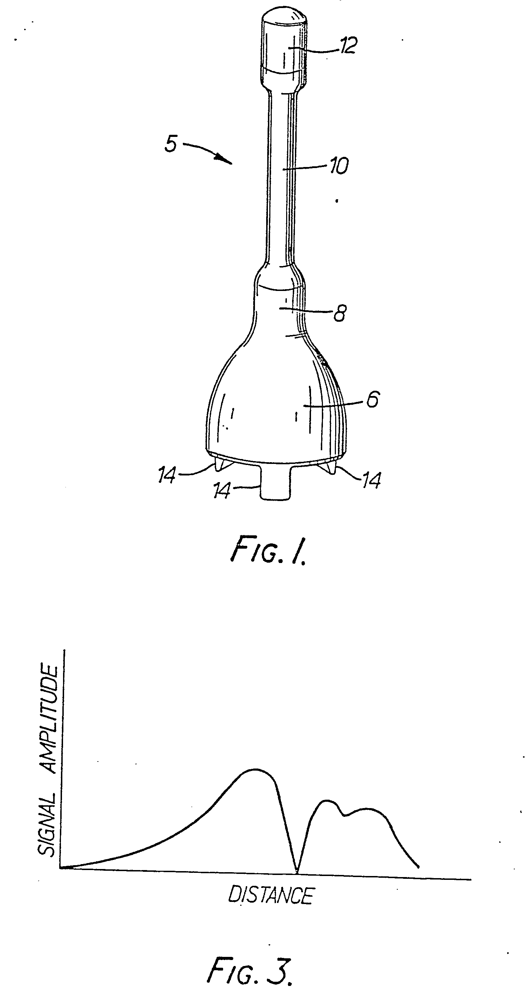

The apparatus to be described is in the form of a portable unit 5 (Fig.1) approximately 1050 mm in height (in one example) which can be easily carried into an area to be protected and then can be placed on the ground, or other flat surface, so as to protect the area in a manner to be explained in more detail.

As shown in Figure 1, the unit 5 has a generally conically shaped base portion 6 which merges into a short cylindrical part 8 itself merging into an extended tubular part 10 supporting an enlarged head 12. The unit stands on three legs 14.

The unit is battery powered, though may be operated from the mains instead.

In operation, the unit is placed within the area to be protected and emits a radar signal into the area which extends for $360^\circ$ around the unit. Reflections from moving targets in the area are received by the unit and processed to produce an alarm indication. The alarm indication may be given audibly or visually on the unit itself and/or may be transmitted by line connection or radio link to a distant location.

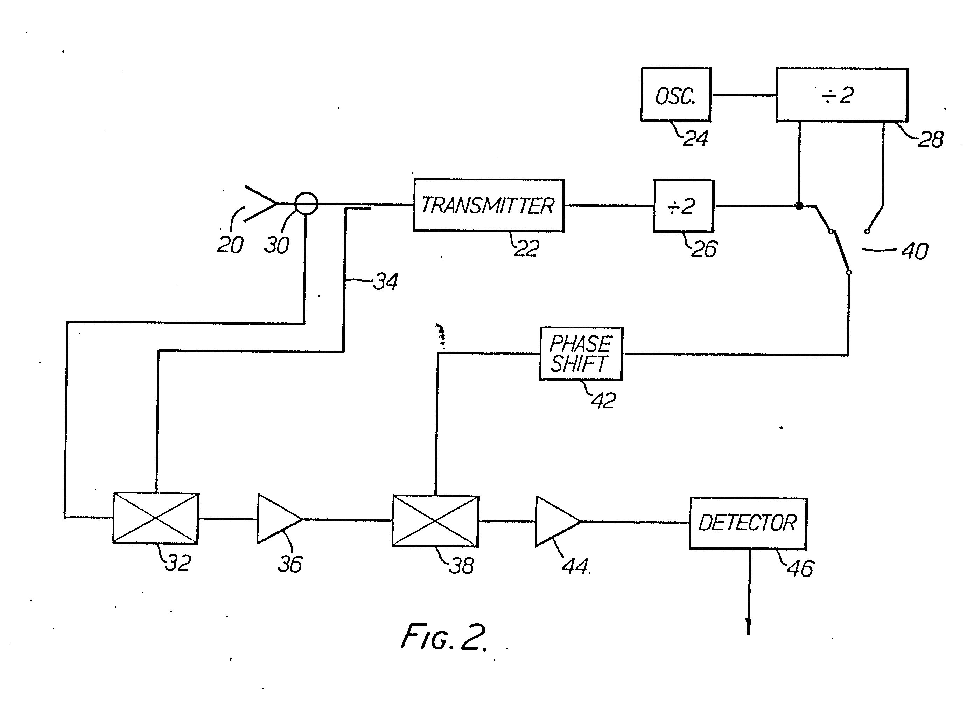

Figure 2 shows the block circuit diagram of the unit.

It has a single transmitting and receiving antenna 20 which is physically positioned within the head 12 (Fig.1) of the unit.

The antenna 20 is fed from a transmitter 22 operating at a frequency in one example between 1 and 2 GHz and this signal is frequency-modulated by an FM signal at 1 MHz derived from a 4 MHz oscillator 24 via two divide-by-two dividers 26 and 28.

The received signal (the target echo), as received by the antenna 20, is directed by a circulator 30 to a first mixer 32 whose other input receives the transmitted signal on a line 34. The difference frequency is amplified by an amplifier 36 tuned to the second harmonic of the modulation frequency of the transmitted signal and passed to a second mixer 38. The second input of the mixer 38 is fed with a signal derived from the divider 28 via a switch 40 and an adjustable phase shifter 42, and is therefore at twice the frequency of the FM signal supplied to the transmitter 22. The divider 28 is arranged to produce two outputs at the divided frequency, these outputs having a $180^{\circ}$ phase shift between them and either being selectable by the switch 40.

In a manner to be considered in more detail below, the mixer 38 therefore extracts the Doppler sidebands around the second harmonic of the modulation frequency which are passed through an amplifier 44 to an amplitude detector 46. The amplitude of these Doppler sidebands vary with range as a second order Bessel function.

If the form of the transmitted signal is assumed to be:

$$\sin \left\{ 2\pi f_o t \pm \frac{\Delta f}{2f_m} \sin 2\pi f_m t \right\} \qquad (1)$$

where $f_o$ = carrier frequency

$f_m$ = modulation frequency

$\Delta f$ = frequency excursion (equal to twice the frequency deviation),

the difference frequency signal may be written

$$v_d = J_o(D)\cos(2\pi f_d t - \phi_o) + 2J_1(D)\sin(2\pi f_d t - \phi)\cos(2\pi f_m t - \phi_m$$

$$- 2J_2(D)\cos(2\pi f_d t - \phi_o)\cos 2(2\pi f_m t - \phi_m)$$

$$- 2J_3(D)\sin(2\pi f_d t - \phi_o)\cos 3(2\pi f_m t - \phi_m)$$

$$+ 2J_4(D)\cos(2\pi f_d t - \phi_o)\cos 4(2\pi f_m t - \phi_m) + 2J_5(D)\ldots \quad (2)$$

where $J_o$, $J_1$, $J_2$, etc. = Bessel functions of first kind and order 0, 1, 2 etc., respectively

$D = (\Delta f/f_m) \sin 2\pi f_m R_o/c$

$R_o$ = distance to target at time t = 0 (distance that would have been measured if target were stationary)

$c$ = velocity of propagation

$f_d = 2v_r f_o/c$ = Doppler frequency shift

$v_r$ = relative velocity of target with respect to radar

$\phi_o$ = phase shift approximately equal to angular distance $4\pi f_o R_o/c$

$\phi_m$ = phase shift approximately equal to $2\pi f_m R_o/c$

The difference frequency signal $V_d$ therefore consists of a Doppler frequency component of amplitude $J_o(D)$ and a series of cosine waves of frequency $f_m, 2f_m, 3f_m \ldots\ldots$ each of the harmonics of $f_m$ being modulated by a Doppler-frequency component with amplitude proportional to $J_n(D)$.

Amplifier 36 is- tuned to pass the second harmonic of the modulation frequency (that is, the term $J_2$ from Equation (1) above). The bandwidth of the amplifier 36 is sufficient to pass both the upper and lower Doppler-frequency sidebands centred at the second harmonic. The mixer 38 mixes the amplifier output with the second harmonic of $f_m$ and the amplifier 44 is tuned to extract the Doppler-frequency from the mixer output. The phase shifter 42 enables adjustment of the phase of the second harmonic of $f_m$ to give best discrimination. The switch 40 enables either the two $180^o$-spaced outputs to be selected, so as to minimise the necessary adjustment range of the phase shifter.

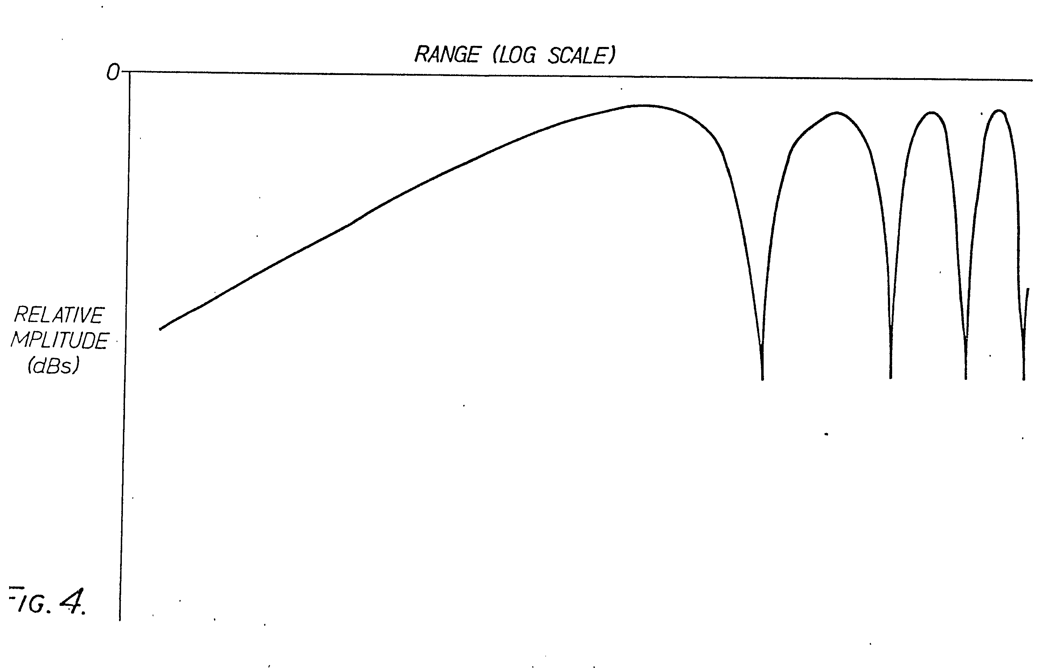

Because the term D is dependent on the target distance (see above), the second order Bessel function term has an amplitude which varies as a function of distance, as shown in Fig.3. The curve of Fig.3 shows how the amplitude of the term has nulls at points spaced at certain distances from the antenna.

In addition, the height of the antenna 20 above the ground is such that the direct and reflected waves interfere and tend to cancel each other beyond a predetermined distance from the antenna (dependent on the antenna height and the wavelength use(

The overall effect, therefore, of the nulls in the second order Bessel function term (explained above),and the cancellation by interaction between the direct and reflected waves,is to provide a quite precise limit to the range from the antenna within which targets can be sensed. Figure 4 shows one form which the overall response can have. In this way, therefore, the system is rendered insensitive to large, distant, targets.

Small targets (e.g.birds) very close to the antenna are not sensed because the response of the second order Bessel function term is zero or very low at such distances (see Fig.3).

As the unit is sensitive only to the Doppler-shifted components, it is insensitive to stationary targets.

CLAIMS

1.   A portable intruder detection unit (5) for detecting by radar, targets within a predetermined area extending at least partially around the unit, comprising a base (6) carrying transmitting and receiving antenna means (20), a power supply, means for energising the antenna means (20) for emitting a frequency-modulated carrier wave, and means (32 to 46) for sensing a Doppler-shifted component in a signal produced by a signal reflected from a moving target within the predetermined area and received by the antenna means (20).

2.   A unit according to claim 1, characterised in that the power supply is battery operated.

3.   A unit according to claim 1 or to claim 2, characterised by means responsive to the sensed Doppler-shifted component to transmit a warning signal to a distant location.

4.   A unit according to claim 3, characterised by a radio link for transmitting said warning signal to said distant location.

5.    A portable radar arrangement comprising a base (6), transmitting antenna means (20) mounted on the base (6) so as to be at a predetermined height above the ground when the base (6) is standing on the ground, means (22) for energising the antenna means (20) with a carrier frequency-modulated at a predetermined frequency, receiving antenna means (20) mounted on the base (6) so as to receive reflected signals from targets, signal processing means (32) responsive to the reflected signals to produce a processed signal dependent on reflected signals differing in frequency from the transmitted signals, the said processed signal including a series of harmonics of the modulating frequency each modulated by a Doppler-frequency component having an amplitude dependent on a Bessel function term of respective order, means (36) for selecting a predetermined one of the said harmonics, means (38) for extracting the Doppler-frequency component therefrom, and means (46) for sensing the amplitude of the extracted components;  the selected harmonic being such that its amplitude is reduced by the respective Bessel function for targets adjacent the transmitting antenna means (20);  and the said predetermined height of the transmitting antenna means (20) being such that direct and ground reflected waves originating from the transmitting antenna means (20) are subject to mutual interference at distances beyond said predetermined distance.

6.    An arrangement according to claim 5, characterised in that the transmitting and receiving antenna means (20) are the same and the signal processing means is connected to respond to the reflected signals via a circulator (30).

FIG. 1.

FIG. 3.

0058032

FIG. 2.

RANGE (LOG SCALE)

RELATIVE
MPLITUDE
(dBs)

3/3

FIG. 4.

0058032